# DEMANDE DE BREVET EUROPEEN

(11) **EP 3 141 428 A1**
(43) Date de publication de la demande: **15.03.2017**
(21) Numéro de dépôt: 16188005.9
(22) Date de dépôt: 09.09.2016
(51) Int. Cl.: B60Q 11/00, H05B 33/08, H05B 37/02

(54) **ARCHITECTURE ELECTRIQUE D'ECLAIRAGE DISTRIBUEE POUR VEHICULE AUTOMOBILE**

(30) Priorité: 14.09.2015 FR 1558529
(71) Demandeur: VALEO VISION, 93012 Bobigny Cedex (FR)
(72) Inventeur: LESAFFRE, Olivier-Sébastien, 93500 Pantin (FR); BRIAND, Gilles, 06250 Mougins (FR); CROS, Christophe, 92000 Nanterre (FR)

(57) **Abrégé**

L'invention propose l'utilisation d'un convertisseur de type Boost (114) unique pour alimenter une pluralité de modules lumineux (120, 130) d'un véhicule automobile en tension électrique. Chaque module comprend un convertisseur de type Buck (124, 134) dédié, afin d'assurer la régulation du courant électrique de manière à satisfaire aux besoins des sources lumineuses (122, 132) du module lumineux en question. Un réseau de communication (102) qui relie l'élément centralisé (110) et les modules lumineux permet d'assurer la commande des modules et la détection de défauts, ainsi que de notifier ceux-ci à d'autres organes du véhicule automobile.

## Description

L'invention a trait au domaine de l'éclairage et de la signalisation lumineuse, notamment pour véhicule automobile.

Dans le domaine de l'éclairage et de la signalisation lumineuse pour véhicules automobiles, il devient de plus en plus courant d'utiliser des sources lumineuses à composants semi-conducteurs électroluminescents, par exemple des diodes électroluminescentes, LED. Un composant LED émet des rayons lumineux lorsqu'une tension d'une valeur au moins égale à une valeur seuil appelée tension directe est appliquée à ces bornes.

De manière connue, une ou plusieurs LEDs d'un module lumineux pour un véhicule automobile sont alimentées par le biais de moyens de pilotage de l'alimentation, qui comprennent des circuits convertisseurs. En général, chaque module lumineux comprend des moyens de pilotage de l'alimentation électrique dédiés. Les moyens de pilotage de l'alimentation électrique comprennent d'une part un convertisseur DC/DC apte à élever la tension électrique fournie par une source internet au véhicule automobile, par exemple une batterie, à une tension électrique plus élevée. D'autre part, les moyens de pilotage de l'alimentation électrique comprennent des moyens de régulation de courant qui sont aptes à fournir un courant direct adapté à l'alimentation des LEDs du module lumineux. Une telle architecture de convertisseurs est généralement connue sous la dénomination Boost-Buck ou encore « step up step down ».

Avec le nombre croissant de fonctions lumineuses et modules lumineux par dispositif lumineux d'un véhicule automobile, la mise à disposition d'une pluralité de dispositifs Boost-Buck, qui occupent chacun un espace relativement important sur un circuit-imprimé, engendre des contraintes de volumes importantes ainsi qu'un nombre de connections électriques important.

L'invention a pour objectif de proposer une solution palliant le problème susmentionné. Plus particulièrement, l'invention a pour objectif de proposer une architecture distribuée d'alimentation électrique d'une pluralité de modules lumineux d'un véhicule automobile.

L'invention a pour objet un système d'alimentation électrique d'une pluralité de modules lumineux d'un véhicule automobile. Chaque module lumineux comprend au moins une source lumineuse, et des moyens de régulation du courant électrique alimentant la ou les sources lumineuses. Le système comprenant en outre un module central comprenant un élément convertisseur de tension électrique configuré pour convertir une tension électrique d'entrée en une tension électrique de sortie et pour fournir la tension électrique de sortie de manière commune à tous les modules lumineux. Le système d'alimentation électrique est remarquable en ce que chaque module lumineux comprend des moyens de transmission/réception de données destinés à envoyer/recevoir des données et en ce que le module central comprend des premiers moyens de transmission/réception de données destinés à envoyer/recevoir des données de/vers au moins un organe du véhicule automobile, ainsi que des deuxièmes moyens de transmission/réception de données destinés à envoyer/recevoir des données de/vers chacun des modules lumineux moyennant un canal de transmission de données.

Les moyens de régulation du courant électrique et/ou les moyens de transmission/réception de données de chaque module peuvent de préférence être montés sur un support de ce module. L'élément convertisseur, les premiers et deuxièmes moyens de transmission/réception de données du module central peuvent de préférence être montés sur un support de ce module, tous les supports étant distincts les uns des autres.

De préférence, les moyens de régulation du courant électrique peuvent comprendre un élément convertisseur abaisseur de tension, par exemple de type Buck.

L'élément convertisseur de tension électrique du module central peut de préférence être configuré pour convertir de façon sélective une tension électrique d'entrée en une tension électrique de sortie supérieure à la tension électrique d'entrée en fonction des données reçues par les premiers moyens de transmission/réception de données. Si on le souhaite, l'élément convertisseur peut comprendre un convertisseur élévateur de tension, notamment de type Boost.

De manière préférée, le module central peut transmettre des données commandant l'allumage d'une partie seulement des modules lumineux, voir une partie seulement des sources lumineuses de ces modules lumineux, en fonction de données reçues sélectionnant les modules lumineux et/ou lesdites sources lumineuses. Le cas échéant, l'élément convertisseur peut de préférence être configuré pour convertir la tension d'entrée en une tension électrique de sortie suffisante pour que tous les modules sélectionnés et/ou les sources lumineuses sélectionnées puissent émettre de la lumière.

L'organe du véhicule peut par exemple être une caméra, un capteur de vitesse, un volant ou un organe de contrôle central du véhicule automobile.

Le canal de transmission de données peut de préférence être un canal de transmission de données commun à tous les modules lumineux. Alternativement, le canal de transmission de données peut comprendre un canal global comportant un réseau de canaux reliant chacun un module lumineux au module central. Le système peut en outre comprendre un ou plusieurs faisceaux d'alimentations reliant le module central à un ou plusieurs, voire tous les modules lumineux pour fournir la tension électrique de sortie à ces modules lumineux.

De préférence, l'élément convertisseur de tension électrique du module central peut être apte à convertir une tension électrique d'entrée de 12 V en une tension électrique de sortie ayant une valeur entre 30 V et 60 V.

De préférence, le module central peut être physiquement déporté par rapport aux modules lumineux. De préférence, les modules lumineux peuvent être physiquement déportés entre eux.

De préférence le régulateur de courant d'au moins un des modules lumineux comprend un convertisseur de type buck, également nommé step down ou un convertisseur linéaire.

De préférence, chaque module lumineux peut comprendre des moyens de traitement reliés aux moyens de transmission/réception de données et aux moyens de régulation du courant électrique, destinés à gérer la régulation du courant électrique en fonction de données reçues par le module.

De préférence les moyens de traitement, les moyens de transmission/réception de données et les moyens de régulation du courant électrique d'un module lumineux peuvent être réalisés sur un circuit imprimé unique.

Chaque module lumineux peut de préférence comprendre des moyens de traitement reliés aux moyens de transmission/réception de données et aux moyens de régulation du courant électrique, destinés à détecter l'état de fonctionnement des moyens de régulation de courant électrique et/ou des sources lumineuses, et à transmettre des données relatives à ce fonctionnement à destination du module central.

Au moins un des modules lumineux peut de préférence comporter une pluralité de sources lumineuses et des moyens de pilotage individuel des sources lumineuses agencés pour que ce module lumineux réalise une fonction d'éclairage et/ou de signalisation dynamique, par exemple de type éclairage de route sélectif ou indicateur de direction défilant. Le cas échéant, les moyens de traitement peuvent également être aptes à détecter l'état de fonctionnement des moyens de pilotage individuel des sources lumineuses. De préférence les données transmises peuvent comprendre la température d'un module, mesurée par des moyens de mesure de la température ou des informations relatives à un défaut d'une source lumineuse.

De manière préférée, le module central peut comprendre des moyens de traitement reliés aux premiers et aux deuxièmes moyens de transmission/réception de données, destinés à relayer des données reçues de la part d'un organe du véhicule automobile à destination d'au moins un des modules lumineux.

Les moyens de traitement peuvent de préférence décoder des données de commande reçues de la part d'un organe du véhicule automobile et les relayer au module lumineux spécifique destinataire de la commande. Les données peuvent à titre d'exemple comprendre une commande visant à allumer ou à éteindre une fonction lumineuse spécifique. La commande peut viser une orientation spécifique d'un élément optique d'un module lumineux.

Le ou les modules lumineux destinataires peuvent de préférence être déterminés par la nature des données reçues ou par une adresse spécifique comprise dans les données reçues.

De préférence, le module central peut comprendre des moyens de traitement reliés aux premiers et aux deuxièmes moyens de transmission/réception de données, destinés à relayer des données reçues de la part d'au moins un des modules lumineux à destination d'un organe du véhicule automobile.

Une fois que des données sont reçues par le module central de la part d'un module lumineux, l'unité de traitement les décode et, suivant le type de données reçues, l'unité de traitement agit sur l'élément convertisseur ou relaye les données à un autre organe du véhicule automobile, moyennant les premiers moyens de transmission de données du module central.

Les données reçues peuvent de préférence être issues d'un module de contrôle central, BCM, « Body Control Module », du véhicule automobile. Les données reçues peuvent comprendre des demandes d'allumage d'une fonction lumineuse spécifique qui peut être réalisée moyennant un des modules lumineux.

Les données reçues et relayées peuvent préférentiellement être des données relatives au fonctionnement du ou des modules lumineux.

Les données relatives au fonctionnement peuvent comprendre des informations relatives à la tension des sources lumineuses, par exemple mesurée par des moyens de mesure de tension disposés dans les modules lumineux, ou des informations relatives à un défaut d'une source lumineuse, par exemple obtenues par des moyens de diagnostique disposés dans les modules lumineux.

Lorsqu'une défaillance d'un des modules lumineux est signalée par les données reçues, les moyens de traitement du module central peuvent de préférence être configurés à faire cesser le fonctionnement du convertisseur afin de couper l'alimentation de tous les modules lumineux.

De préférence, chaque module lumineux peut être destiné à réaliser au moins une fonction lumineuse spécifique du véhicule automobile. Il peut s'agir par exemple d'une fonction d'éclairage de type croisement, d'éclairage de type route, d'éclairage de type route sélectif, ou autre.

Les premiers moyens de transmission/réception de données du module central peuvent de préférence être adaptés pour transmettre/recevoir des données sur un bus informatique de type LIN, « Local Interconnected Network », ou CAN, « Controller Area Network ».

De préférence les deuxièmes moyens de transmission/réception de données du module central et les moyens de transmission/réception de données de chacun des modules lumineux peuvent être adaptés pour transmettre/recevoir des données sur un bus informatique de type LIN, « Local Interconnected Network », ou CAN, « Controller Area Network ».

De préférence, le système d'alimentation électrique selon l'invention peut comprendre un module de contrôle d'un ou plusieurs modules lumineux, le module central étant agencé pour fournir la tension électrique de sortie au module de contrôle, le module de contrôle comportant :
- un actionneur pour entraîner un mouvement du ou des modules lumineux,
- des moyens de transmission/réception de données destinés à envoyer/recevoir des données
les deuxièmes moyens de transmission/réception de données du module central étant destinées à envoyer/recevoir des données vers le module de contrôle via le canal de transmission de données.

L'actionneur peut de préférence être agencé pour réaliser une fonction de correction de la portée du ou des faisceaux lumineux émis par le ou les modules lumineux ou une fonction de suivi dynamiques de virage.

Les mesures de l'invention sont intéressantes en ce qu'elles permettent l'utilisation d'un convertisseur de type Boost centralisé et commun à une pluralité de modules lumineux d'un véhicule automobile. Ceci engendre un gain de volume occupé et de poids par rapport à des solutions connues. L'utilisation de moyens de communication de données permet de recevoir des commandes à destination de modules lumineux spécifiques de la part d'autres organes du véhicule automobile au niveau de l'entité centralisée. Cette dernière relaye les commandes aux modules lumineux spécifiques destinataires. De manière similaire, des informations par rapport au fonctionnement des modules lumineux, générées au niveau de chacun des modules lumineux, sont reçues de manière centralisée par l'élément commun de l'architecture, qui peut les relayer à d'autres organes du véhicule automobile, par exemple au BCM, en utilisant par exemple un bus de données de type CAN ou LIN intégré au véhicule automobile.

D'autres caractéristiques et avantages de la présente invention seront mieux compris à l'aide de la description et du dessin suivant :

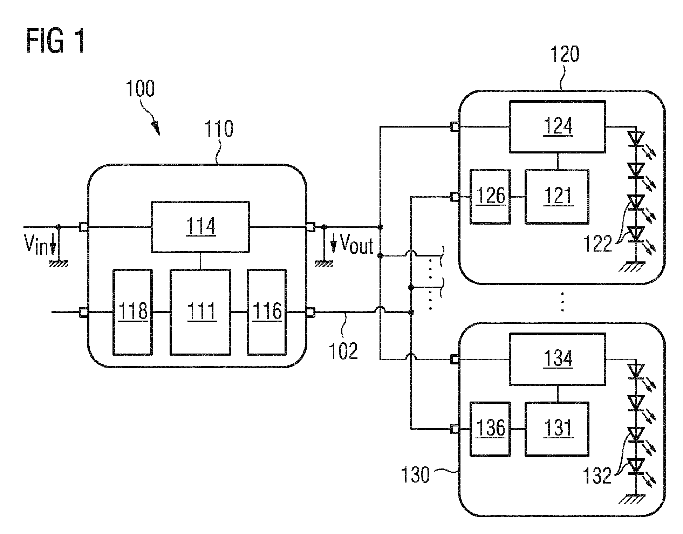

- la figure 1 est une vue schématique de l'architecture distribuée selon l'invention, dans un mode de réalisation préférentiel.

Sauf indication spécifique du contraire, des caractéristiques techniques décrites en détail pour un mode de réalisation donné peuvent être combinées aux caractéristiques techniques décrites dans le contexte d'autres modes de réalisation décrits à titre exemplaire et non limitatif.

L'invention concerne un système d'alimentation électrique d'une pluralité de modules lumineux d'un véhicule automobile. Chaque module lumineux réalise de préférence au moins une fonction lumineuse du véhicule automobile, telle que par exemple la fonction feux de route, la fonction feux diurnes ou la fonction feux directionnels. Chaque module lumineux comprend au moins une source lumineuse, qui est de préférence une source lumineuse à élément semi-conducteur, par exemple une diode électroluminescente, LED. Un module lumineux peut comprendre une pluralité de LEDs branchées en série. Un module comprend également des moyens de régulation du courant électrique, par exemple de type Buck. Les moyens de régulation du courant réalisent un élément convertisseur qui assure que les sources lumineuses du module sont alimentées à l'aide d'un courant électrique d'une intensité convenable à leur fonctionnement. Un module lumineux peut en outre comprendre des éléments optiques tels que des guides lumineux ou des réflecteurs aptes à diriger les rayons lumineux émis par la ou les sources lumineuses selon des directions prédéterminées. Ces mesures ne sont pas décrites en détails dans le contexte de la présente invention. Chacun des modules lumineux est alimenté en amont par un module central commun, qui comprend un élément convertisseur, par exemple de type Boost. Ce convertisseur est configuré à convertir une tension électrique d'entrée, fournie par une batterie du véhicule automobile, en une tension électrique de sortie, qui est fournie de façon commune à tous les modules lumineux.

La tension électrique fournie par l'élément convertisseur central est distribuée, à l'aide de connexions électriques, vers les modules lumineux.

A part ces liaisons électriques entre le l'élément convertisseur central et les modules lumineux, l'architecture selon l'invention comprend des liaisons de communication distinctes des liaisons d'alimentation électriques. D'une part, l'élément central est configuré pour pouvoir recevoir et envoyer des données de/vers d'autres organes du véhicule automobile à l'aide de moyens de communication adaptés. D'autre part, l'élément central est configuré pour pouvoir recevoir et envoyer des données de/vers chacun des modules lumineux à l'aide de moyens de communications adaptés. Les moyens de communication comprennent des moyens de réception/transmission de données et impliquent par exemple un bus de données de type LIN « Local Interconnected Network », ou CAN, « Controller Area Network » en guise de canal de transmission de données. De manière alternative, une architecture de réseau impliquant des canaux de transmission dédiés reliant chacun des modules lumineux au module central peut être envisagée.

La figure 1 montre de manière schématique un mode de réalisation préféré de l'architecture conforme à l'invention.

Le système 100 comprend un module central 110 qui incorpore un élément convertisseur de tension électrique 114 configuré pour convertir la tension électrique d'entrée V_{IN} en une tension électrique V_{OUT} de valeur différente. De préférence, la tension V_{IN} est de l'ordre de 12 V, tandis que V_{OUT} est compris entre 30 V et 60 V, par exemple. La tension V_{OUT} peut en outre être adaptée aux besoins des modules lumineux et en fonction des commandes reçues par le module central.

Le module central 110 comprend des premier moyens de transmission/réception de données 118 destinés à envoyer/recevoir des données de/vers au moins un organe du véhicule automobile. Il peut à titre d'exemple s'agir d'une caméra, du volant ou d'un organe de contrôle central du véhicule automobile. Des deuxièmes moyens de transmission/réception de données 116 sont prévus pour envoyer/recevoir des données de/vers chacun des modules lumineux du système 100.

Des moyens de traitement 111, impliquant par exemple un élément microprocesseur ou un microcontrôleur programmable sont adaptés de manière à interpréter les message ou données reçues par le module central 110.

Lorsque une commande destinée à un module spécifique parmi les modules lumineux du système 100 est reçue de la part d'un organe du véhicule automobile à l'aide des premiers moyens de réception de données 118, les moyens de traitement décodent les données reçues et les relayent au module lumineux spécifique destinataire de la commande. Dans un tel cas de figure, les données peuvent à titre d'exemple comprendre une commande visant à allumer ou à éteindre une fonction lumineuse spécifique. Dans un autre mode de réalisation, impliquant un module lumineux à élément optique orientable par des moyens d'orientation, la commande peut viser une orientation spécifique de l'élément optique du module, afin de guider les rayons lumineux émis par le module dans une direction prédéterminée. Les données reçues par le module central 110 ne sont donc pas nécessairement limitées à l'alimentation électrique des modules lumineux, mais elles peuvent également concerner d'autres fonctionnalités desdits modules lumineux. Un élément actionneur peut notamment être prévu pour entraîner un mouvement du ou des modules lumineux suite à une commande reçue qui vise une correction de la portée du ou des faisceaux lumineux émis par un module lumineux, ou qui vise une fonction de suivi dynamique de virage.
Les moyens de traitement 111 sont également aptes à agir sur le fonctionnement de l'élément de conversion 114, suite à des données reçues par les premiers ou deuxièmes moyens de réception de données 116. Par exemple, lorsqu'une défaillance d'un des modules lumineux est signalée par les données reçues, les moyens de traitement 111 sont aptes à faire cesser le fonctionnement du convertisseur 114 afin de couper l'alimentation de tous les modules lumineux. D'autres cas de figures sont envisageables selon les applications visées et sans pour autant sortir du cadre de la présente invention.

Un réseau de distribution électrique composé de fils conducteurs et de connecteurs adaptés relie la sortie de l'élément convertisseur Boost 114 du module central 110 à chacun des modules lumineux 120, 130 et plus spécifiquement à un élément de régulation de courant de type Buck 124, 134 de ceux-ci. A titre d'illustration, la figure 1 montre deux modules lumineux. L'invention n'est pourtant pas limitée à cet exemple et le système peut dans d'autres modes de réalisation comprendre une pluralité plus importante de modules lumineux. De même, chacun des modules 120, 130 est illustré comprenant quatre sources lumineuses 122, 132 de type LED. L'invention couvre néanmoins des modules lumineux impliquant chacun des nombres et/ou types de sources lumineuses différentes.

Les modules lumineux 120, 130 comprennent en outre des moyens de transmission/réception de données 126, 136 destinés à envoyer et/ou recevoir des données. Les moyens de transmission/réception de données 126, 136 sont reliés par un canal de transmission de données 102, par exemple par un bus de données du type CAN ou LIN, aux deuxièmes moyens de transmission/réception de données du module central 110. Ceci permet d'établir la communication entre le module central 110 et les modules lumineux 120, 130 et vice-versa.

Des moyens de traitement 121, 131 impliquant par exemple un élément microprocesseur ou un microcontrôleur programmable sont adaptés de manière à interpréter les message ou données reçues par le module lumineux 120, 130. Les moyens de traitement 121, 131 sont de préférence également adaptés à envoyer des données relatives au fonctionnement du module lumineux 120, 130 à destination du module central. Ces informations peuvent comprendre des informations relatives à la défaillance d'un composant du module tel que l'élément convertisseur 124, 134 ou une des sources lumineuses 122, 132, ou des informations relatives au fonctionnement normal du module 120, 130, par exemple des mesures de températures donnant une indication de la température de jonction des LEDs du module. Une fois que ces données sont reçues par le module central 110, l'unité de traitement 111 les décode et, suivant le type de données reçues, l'unité de traitement 111 agit sur l'élément convertisseur 114 ou relaye les données à un autre organe du véhicule automobile, moyennant les premiers moyens de transmission de données 118 du module central.

La mise à disposition d'un élément central 110 permet d'y relier des pluralités différentes de modules lumineux selon le type de véhicule automobile. Seule l'interprétation des données reçues/relayées par l'élément central 110 doit être adaptée d'une architecture à une autre, ce qui implique uniquement des étapes de programmation. Chaque module lumineux relié à l'élément central peut avoir ses propres besoins d'intensité de courant et peut par exemple être configuré pour générer et/ou pour réagir sur des données ou messages spécifiques à la fonction lumineuse qu'il réalise. L'architecture distribuée proposée se distingue donc par un niveau de modularité important, tout en limitant les besoins d'espace et de poids des éléments électroniques impliqués par rapport à des solutions connues dans l'art.

## Revendications

1. Système d'alimentation électrique (100) d'une pluralité de modules lumineux (120, 130) d'un véhicule automobile, chaque module lumineux comprenant :
- au moins une source lumineuse (122, 132), et
- des moyens de régulation du courant électrique (124, 134) alimentant la ou les sources lumineuses
le système comprenant en outre un module central (110) comprenant un élément convertisseur de tension électrique (114) configuré pour convertir une tension électrique d'entrée en une tension électrique de sortie et pour fournir la tension électrique de sortie de manière commune à tous les modules lumineux (120, 130),
**caractérisé en ce que**
- chaque module lumineux (120, 130) comprend des moyens de transmission/réception de données (126, 136) destinés à envoyer/recevoir des données ;
- le module central (110) comprend des premiers moyens de transmission/réception de données (118) destinés à envoyer/recevoir des données de/vers au moins un organe du véhicule automobile, ainsi que des deuxièmes moyens de transmission/réception (116) de données destinés à envoyer/recevoir des données de/vers chacun des modules lumineux (110, 120) moyennant un canal de transmission de données (102).

2. Système d'alimentation électrique selon la revendication 1, **caractérisé en ce que** chaque module lumineux (120, 130) comprend des moyens de traitement (121, 131) reliés aux moyens de transmission/réception de données (126, 136) et aux moyens de régulation du courant électrique (124, 134), destinés à gérer la régulation du courant électrique en fonction de données reçues par le module.

3. Système d'alimentation électrique selon une des revendications 1 ou 2, **caractérisé en ce que** chaque module lumineux (120, 130) comprend des moyens de traitement (121, 131) reliés aux moyens de transmission/réception de données (126, 136) et aux moyens de régulation du courant électrique (124, 134), destinés à détecter l'état de fonctionnement des moyens de régulation de courant électrique (124, 134) et/ou des sources lumineuses (122, 132), et à transmettre des données relatives à ce fonctionnement à destination du module central (110).

4. Système d'alimentation électrique selon une des revendications 1 à 3, **caractérisé en ce que** le module central (110) comprend des moyens de traitement (111) reliés aux premiers et aux deuxièmes moyens de transmission/réception de données (118, 116), destinés à relayer des données reçues de la part d'un organe du véhicule automobile à destination d'au moins un des modules lumineux (120, 130).

5. Système d'alimentation électrique selon la revendication 4, **caractérisé en ce que** le ou les modules lumineux destinataires (120, 130) sont déterminés par la nature des données reçues ou par une adresse spécifique comprise dans les données reçues.

6. Système d'alimentation électrique selon une des revendications 1 à 5, **caractérisé en ce que** le module central (110) comprend des moyens de traitement (111) reliés aux premiers et aux deuxièmes moyens de transmission/réception de données (118, 116), destinés à relayer des données reçues de la part d'au moins un des modules lumineux (120, 130) à destination d'un organe du véhicule automobile.

7. Système d'alimentation électrique selon la revendication 6, **caractérisé en ce que** les données reçues et relayées sont des données relatives au fonctionnement du ou des modules lumineux (120, 130).

8. Système d'alimentation électrique selon une des revendications 1 à 7, **caractérisé en ce que** chaque module lumineux (120, 130) est destiné à réaliser au moins une fonction lumineuse spécifique du véhicule automobile.

9. Système d'alimentation électrique selon une des revendications 1 à 8, **caractérisé en ce que** les premiers moyens de transmission/réception de données (118) du module central (110) sont adaptés pour transmettre/recevoir des données sur un bus informatique de type LIN, « Local Interconnected Network », ou CAN, « Controller Area Network ».

10. Système d'alimentation électrique selon une des revendications 1 à 9, **caractérisé en ce que** les deuxièmes moyens de transmission/réception de données (116) du module central (110) et les moyens de transmission/réception de données (126, 136) de chacun des modules lumineux (120, 130) sont adaptés pour transmettre/recevoir des données sur un bus informatique de type LIN, « Local Interconnected Network », ou CAN, « Controller Area Network ».

11. Système d'alimentation électrique selon une des revendications 1 à 10, **caractérisé en ce qu'**il comprend un module de contrôle d'un ou plusieurs modules lumineux, le module central étant agencé pour fournir la tension électrique de sortie au module de contrôle, le module de contrôle comportant :
- un actionneur pour entraîner un mouvement du ou des modules lumineux,
- des moyens de transmission/réception de données (126, 136) destinés à envoyer/recevoir des données
les deuxièmes moyens de transmission/réception de données du module central étant destinées à envoyer/recevoir des données vers le module de contrôle via le canal de transmission de données.
